**Europäisches Patentamt**

**European Patent Office**

**Office européen des brevets**

(19)

(11) Veröffentlichungsnummer: **0 143 239**
**B1**

(12) # EUROPÄISCHE PATENTSCHRIFT

(45) Veröffentlichungstag der Patentschrift:
**22.07.87**

(51) Int. Cl.⁴: **B 29 B 7/74**

(21) Anmeldenummer: **84111145.3**

(22) Anmeldetag: **19.09.84**

(54) Verfahren und Einrichtung zum Herstellen eines Kunststoff, insbesonder Polyurethan-Werkstoff bildenden, fliessfähigen Reaktionsgemisches.

(30) Priorität: **01.10.83 DE 3335785**

(43) Veröffentlichungstag der Anmeldung:
**05.06.85 Patentblatt 85/23**

(45) Bekanntmachung des Hinweises auf die Patenterteilung:
**22.07.87 Patentblatt 87/30**

(84) Benannte Vertragsstaaten:
**DE FR GB IT**

(56) Entgegenhaltungen:
**DE-A-2 724 911**
**DE-A-2 912 080**
**DE-B-1 704 608**

(73) Patentinhaber: **BAYER AG, Konzernverwaltung RP Patentabteilung, D-5090 Leverkusen 1 Bayerwerk (DE)**

(72) Erfinder: **Boden, Heinrich, Sperberweg 14, D-5090 Leverkusen 3 (DE)**
Erfinder: **Schneider, Walter, Christian- Heesen-Strasse 21, D-5063 Overath 6 (DE)**

EP 0 143 239 B1

## Beschreibung

Die Erfindung betrifft ein Verfahren und eine Einrichtung zum Herstellen eines Kunststoff, insbesondere Polyurethan-Werkstoff bildenden, fließfähigen Reaktionsgemisches aus mindestens zwei fließfähigen Reaktionskomponenten, welche von Vorratszonen im vorgegebenen Verhältnis dosiert zu mehreren parallel geschalteten Mischzonen geführt werden wobei Hauptströme jeweils in eine mindestens der Anzahl der Mischzonen entsprechende Anzahl von paarweise einenander zugeordneten Teilströmen aufgeteilt werden (DE-B- 1 704 608).

Es ist bekannt (DE-B- 1 704 608 und DE-AS 1 114 313 entsprechend US-PS 3 073 533), z. B. beim Ausschäumen von Ecken in Kühlschränken gleichzeitig mit vier Mischköpfen in die Ecken einzuschäumen. Der Zulauf der Komponenten zu diesen Mischköpfen erfolgt dabei mit einer zentralen Pumpenstation oder mit getrennten Einzelpumpen und Steuerrelais für jeden einzelnen Mischkopf. Bei beiden Ausführungsformen ist also jedem Mischkopf pro Komponente eine Pumpe zugeordnet, wobei die zentrale Pumpenstation einen gemeinsamen Antrieb für die Pumpen besitzt. Die Einzelpumpen hingegen sind einzeln angetrieben. Der apparative Aufwand ist hierbei allerdings groß, und vor allem ist die Umgebung der Füllstelle, in der Regel ein Formwerkzeug, durch diese großen Apparaturen und die Vielzahl der zu den Mischköpfen führenden Rohr- und Schlauchleitungen nur schwer zugänglich, so daß das Bedienungspersonal beim Hantieren beeinträchtigt ist. Ebenso nachteilig ist der große Platzbedarf.

Um diesen Aufwand zu vermeiden, hat man auch schon bei der Herstellung von Kraftfahrzeugbodengruppen (US-PS 34 15 568), welche aus zwei einen Schaumstoffkern einhüllenden Schalen bestehen, in einen für den Schaumstoffkern vorgesehenen Hohlraum ein Verteilerrohrsystem eingelegt, welches einerseits mit einem einzigen Mischkopf in Verbindung steht und andererseits mehrere Auslässe an gewünschten Stellen aufweist. Dieses Verteilerrohrsystem verbleibt in dem Schaumstoffkern und dient gleichzeitig als Verstärkungseinlage. Bei dünnwandigen Formteilen läßt sich diese Methode nicht anwenden, und viele Formteile benötigen keine Verstärkungseinlage.

Es besteht die Aufgabe, ein Verfahren und eine Einrichtung zu entwickeln, womit es möglich ist, Hohlräume auszufüllen, insbesondere in Formwerkzeugen Formteile herzustellen, wobei einerseits die Forderung nach hoher Eintragsleistung bei geringer Fließfrontgeschwindigkeit erfüllt wird und andererseits die Umgebung der Füllstelle bzw. der Formwerkzeuge möglichst nur von wenigen kompakten Teilen der Einrichtung belegt ist, so daß eine gute Zugänglichkeit gegeben ist.

Diese Aufgabe wird nach dem neuen Verfahren dadurch gelöst, daß die Hauptströme dosiert werden und mittels einer gesonderten Einrichtung sowohl das Dosierverhältnis der einander zugeordneten Teilströme der Komponenten entsprechend dem Dosierverhältnis der Hauptströme aufrecht erhalten wird als auch ein vorgegebenes Aufteilungsverhältnis der Teilströme untereinander gewährleistet wird.

Dadurch wird erreicht, daß die Aufteilung der Hauptströme erst kurz vor der Füllstelle bzw. dem Formwerkzeug stattzufinden braucht, während die Dosierpumpen weiter entfernt vorgesehen werden können.

Es versteht sich, daß dieses Verfahren in vorteilhafter Weise auch zum Füllen mehrerer Formwerkzeughöhlungen verwendet werden kann. Dies ist insbesondere der Fall bei der Anordnung mehrerer Formwerkzeuge auf einem Formenträger oder bei mehreren Höhlungen in einem Formwerkzeug.

Solche Formwerkzeuge bzw. Höhlungen wurden bisher entweder parallel, von einem Mischkopf ausgehend, über einen gemeinsamen Angießkanal, oder nacheinander gefüllt. In letzterem Falle würden die den Werkzeughöhlungen zugeordneten Mischköpfe nacheinander betätigt. Als Nachteil mußte im ersten Falle unterschiedlicher Füllgrad bei unterschiedlicher Entlüftung der Hohlräume in Kauf genommen werden. Dabei wurden die zugeordneten Mischköpfe mit konstanten Volumenströmen der Komponenten versorgt. Eine parallele, gegebenenfalls auf das zu füllende Volumen abgestimmte Füllung mit unterschiedlichen Volumenströmen (Teilmengen) wie sie das neue Verfahren bietet, war nicht möglich.

Nach einer besonderen Durchführungsform des Verfahrens werden die Hauptströme hierbei zu Teilströmen unterschiedlicher Menge aufgeteilt.

Diese Maßnahme erlaubt es, abgestimmt auf die geometrischen Bedingungen innerhalb der Formwerkzeughöhlung, den verschiedenen Mischköpfen unterschiedliche Mengen an Komponenten zuzuführen, so daß dementsprechend die Mischköpfe unterschiedliche Gemischmengen je Zeiteinheit ausstoßen. Auf diese Weise kann man in größere, sehr einfach konstruierte Abschnitte des Formhohraumes einen größeren Volumenstrom an Reaktionsgemisch einbringen als in andere Abschnitte, bei denen wegen eventueller Verengungen und dünnerer Stärke des herzustellenden Formteiles die Fließfrontgeschwindigkeit des Reaktionsgemisches in Grenzen gehalten werden muß.

Vorzugsweise wird wenigstens einer der einander zugeordneten Teilströme mindestens zeitweise zu den Vorratszonen zurückgefördert.

Durch zeitversetztes Zu- oder Abschalten eines oder mehrerer Mischköpfe läßt sich auf diese einfache Weise der Füllvorgang des Formhohlraumes optimieren. Diese Maßnahme ist zum Beispiel auch dann sinnvoll, wenn man zunächst einen Teil eines Formhohlraumes, ausgehend von einem Mischkopf, füllen will und nach Aufbau einer entsprechenden Fließfront und Entlüftung eines kompliziert gestalteten Abschnittes des Formhohlraumes zeitversetzt einen zweiten Mischkopf mit dem entsprechenden Teilvolumenstrom an Reaktionsgemisch zu- bzw. abschalten will.

Die Einrichtung zur Durchführung des Verfahrens geht aus von Vorratsbehältern, von denen Zuleitungen über Dosierpumpen zu mehreren parallel angeordneten Mischköpfen führen und für jede Reaktionskomponente eine Dosierpumpe vorgesehen ist, wie aus DE-A- 2 912 080 bekannt ist.

Das Neue ist darin zu sehen, daß zwischen diesen Dosierpumpen und den Mischköpfen hydraulische, aus parallel angeordneten Elementen bestehende Mengenteiler in den Zuleitungen vorgesehen sind und daß diese Mengenteiler zwangsgekoppelt sind.

Derartige Mengenteiler waren bisher als Ölstromteiler bekannt. Sie sind aus einzelnen, miteinander über eine gemeinsame Welle verbundenen Elementen als Zahnradmengenteiler oder Radial- bzw. Axial-Kolbenmengenteiler aufgebaut. Sie sind beispielsweise in "Hydraulische Mengenteiler (Ölstromteiler)" der Fa. Jahns-Regulatoren GmbH, D 6050 Offenbach/Main, Ausgabe 3/83 offenbart. Da diese Mengenteiler keinen eigenen Antrieb aufweisen, haben sie relativ geringe Baugröße und lassen sich ohne großen Platzbedarf in unmittelbarer Nähe des Formwerkzeuges anordnen. Da die Elemente jedes Mengenteilers auf einer gemeinsamen Welle sitzen und durch die Teilströme angetrieben werden, bleibt bei der Aufteilung das durch die Dosierpumpenen vorgegebene Dosierverhältnis der Komponenten auch in den Teilströmen erhalten.

Ein weiterer Vorteil, beispielsweise beim Einsatz von Zahnradmengenteilern, besteht in der an sich bekannten Messung der Zahnfrequenz an einem Element der Mengenteiler und damit über das Schluckvolumen in der Messung und Überwachung sowohl des momentanen Hauptvolumenstromes als auch aller Teilvolumenströme. Falls die Mengenteiler für die verschiedenen Reaktionskomponenten miteinander starr gekoppelt sind, kann in einer vorteilhaften Ausführungsform mit nur einer Dosierpumpe für den Mengenteiler einer Komponente gearbeitet werden. Die Mengenteiler der anderen Komponenten werden in diesem Falle entweder über einfache Förderpumpen geringerer Dosiergenauigkeit oder über druckbeaufschlagte (Vorrats)-Behälter versorgt.

Nach einer besonderen Ausführungsform besitzen die Elemente der Mengenteiler unterschiedliche Durchsatzleistung. Das heißt, die einzelnen Elemente haben verschiedene Baugröße, was bei Zahnradteilern beispielsweise durch verschiedene Breiten der Zahnräder erreichbar ist. Ebenfalls lassen sich auch mehrere Elemente eines Mengenteilers parallel auf einen der Mischköpfe schalten.

Nach einer anderen Ausführungsform der Einrichtung sind die Elemente jedes Mengenteilers durch Untersetzungsgetriebe miteinander verbunden.

Auch durch diese Maßnahme läßt sich der Hauptstrom jeder Komponente in unterschiedlich große Teilströme aufgliedern. Vorzugsweise sind die Untersetzungsgetriebe schaltbar.

Dadurch wird erreicht, daß die Mengenverhältnisse der Teilströme während der Förderung veränderbar sind. Das heißt beispielsweise, daß ein Mischkopf nach einer gewissen Zeit - den Erfordernissen entsprechend - mehr oder weniger Reaktionsgemisch ausstoßen kann.

Bei all diesen Ausführungsformen ist selbstverständlich darauf zu achten, daß die jeweils einem bestimmten Mischkopf zugeordneten Elemente der Mengenteiler für jede Komponente einander entsprechend gestaltet bzw. einander entsprechend beeinflußbar sein müssen.

Dabei ist es, abweichend von dem neuen Verfahren, auch möglich, das Dosierverhältnis einander entsprechender Teilströme der Komponenten im Vergleich zu anderen zu verändern, indem man nur für einen bestimmten Teilstrom einer Komponente ein Element anderer Größe oder ein Untersetzungsgetriebe vorsieht und entsprechend schaltet.

Das gleiche kann erreicht werden durch Zu- oder Abschaltung von unabhängig voneinander steuerbaren Einspritzdüsen in Rezirkulationsmischköpfen, wenn jeder Düse ein Mengenteilerelement zugeordnet ist.

Es zeigt sich also, daß die Erfindung über ihren eigentlichen, eingangs genannten Zweck hinaus noch eine Reihe besonderer Vorteile bietet, die mit bisher bekannten Mitteln nur recht aufwendig zu realisieren waren.

In der Zeichnung ist die neue Einrichtung in mehreren Ausführungsbeispielen rein schematisch dargestellt und nachstehend näher erläutert. Es zeigen:

Fig. 1 die gesamte Einrichtung im Funktionsschema ohne Rücksicht auf die wahren Größenverhältnisse,

Fig. 2 eine besondere Ausführungsform eines Mengenteilers und

Fig. 3 eine weitere besondere Ausführungsform eines Mengenteilers.

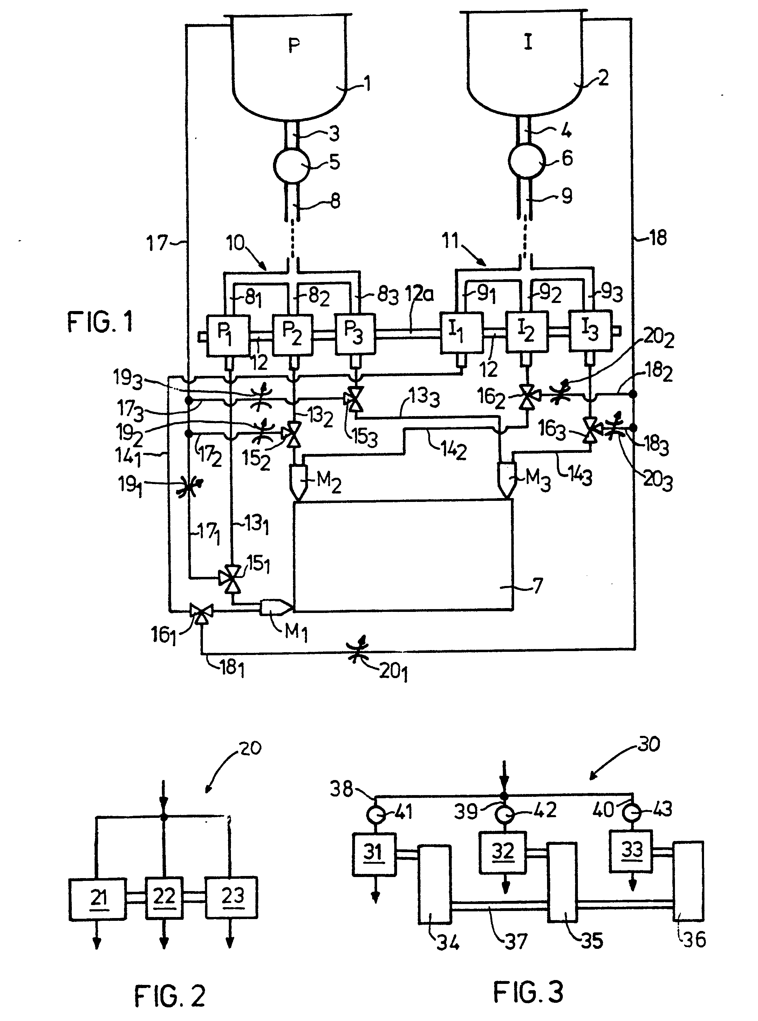

In Fig. 1 führen von Vorratsbehältern 1,2 für Polyol und Isocyanat Leitungen 3, 4 zu den Dosierpumpen 5, 6. Diese sind abseits von einem Formwerkzeug 7 angeordnet. Längere Zuleitungen 8, 9 führen von den Dosierpumpen 5, 6 zu Mengenteilern 10, 11, welche unmittelbar am Sockel des Formwerkzeuges 7 angeordnet sind. Die Zuleitungen 8,9 teilen sich in Zweigleitungen $8_1, 8_2, 8_3$, bzw. $9_1, 9_2, 9_3$. Jede dieser Zweigleitungen

$8_1,8_2,8_3$; $9_1,9_2,9_3$ mündet in eines der Elemente $P_1,P_2,P_3$;$I_1,I_2, I_3$ der Mengenteiler 10, 11. Die Elemente $P_1,P_2,P_3$; $I_1,I_2,I_3$ sind nach Art von Zahnradpumpen aufgebaut und über eine gemeinsame Welle 12 miteinander verbunden. Die Dosierpumpen 5, 6 führen die Komponenten Polyol und Isocyanat im volumetrischen Verhältnis 1:1 zu. Deshalb besitzen in diesem Sonderfall die beiden Mengenteiler 10, 11 die gemeinsame Welle 12a, welche für besonders exakte Einhaltung des Dosierverhältnisses bei der Aufteilung der Ströme sorgt. Austrittsseitig führen von den jeweils einander zugeordneten Elementen $P_1,I_1$ bzw. $P_2,I_2$ bzw. $P_3,I_3$ Zuleitungen $13_1,14_1$; $13_2, 14_2$; $13_3,14_3$ über Umschalthähne $15_1,16_1$; $15_2,16_2$; $15_3,16_3$ zu Mischköpfen $M_1,M_2,M_3$, welche an verschiedenen Ecken des Formwerkzeuges 7 angeordnet sind und in den Formhohlraum öffnen. Von den Umschalthähnen $15_1,16_1$; $15_2,16_2$; $15_3,16_3$ führen Zweigrückleitungen $17_1,17_2,17_3$; $18_1,18_2,18_3$ ab zu Sammelrückleitungen 17, 18, welche in die Vorratsbehälter 1, 2 münden. Beim Einsatz von sogenannten "Rezirkulationsmischern" sind die Umschalthähne $15_1, 16_1$; $15_2, 16_2$; $15_3,16_3$ nicht erforderlich. In den Zweigrückleitungen $17_1,17_2,17_3$; $18_1,18_2,18_3$ sind gegebenenfalls Drosselorgane $19_1 19_2,19_3$; $20_1,20_2,20_3$ vorgesehen, so daß der Kreislaufdruck auf das Niveau des Mischdruckers einstellbar ist.

Der Mengenteiler 20 gemäß Fig. 2 besteht ebenfalls aus zahnradartigen Elementen 21, 22, 23. Die unterschiedliche Größe der Elemente 21, 23 gegenüber dem Element 22 soll die unterschiedliche Durchsatzmenge symbolisieren. Die unterschiedliche Durchsatzmenge beruht auf verschieden großen Fördervolumen durch unterschiedliche Breite der Zahnräder.

Beim Mengenteiler 30 gemäß Fig. 3 sind die Elemente 31, 32, 33 nicht direkt über eine gemeinsame Welle verbunden, sondern indirekt über umschaltbare Untersetzungsgetriebe 34, 35, 36, welche ihrerseits über eine gemeinsame Welle 37 verbunden sind. In den Zweigleitungen 38, 39, 40 sind Absperrhähne 41, 42, 43 angeordnet.

Die Ausführungsform gemäß Fig. 3 eignet sich besonders für Einrichtungen ohne Rücklaufleitungen, weil man hier mittels der Absperrhähne den Zufluß zu den entsprechenden Mischköpfen unterbrechen kann. Dabei wird, synchron zum Schließen eines der Absperrhähne 41, 42, 43, das zugeordnete Mengenteilerelement 31, 32, 33 über das jeweilige schaltbare Untersetzungsgetriebe 34, 35, 36 ebenfalls abgeschaltet, so daß es nicht mehr mitläuft. Es ist jedoch dabei zu berücksichtigen, daß sich bei konstantem Hauptvolumenstrom beim Ab- und Zuschalten eines Mengenteilerelementes die restlichen Volumenteilströme entsprechend verändern.

Diese Erscheinung tritt beim Einsatz von Rezirkulationsmischköpfen nicht auf, denn hierbei werden die Mengenteilerelemente nicht abgeschaltet. In Rezirkulationsstellung eines Mischkopfes werden die diesem Mischkopf von den zugehörigen Mengenteilerelementen angebotenen Volumenteilströme an der geschlossenen Mischkammer in bekannter Weise vorbei zurück zu den Vorratsbehältern gefördert. Beim Umschalten auf die Mischstellung treten die Volumenteilströme der Reaktionskomponenten in die Mischkammer ein und werden dort im Durchlauf vermischt. Das resultierende Reaktionsgemisch strömt aus der Mischkammer über ein Angießsystem in das Formwerkzeug.

**Patentansprüche**

1. Verfahren zum Herstellen eines Kunststoff, insbesondere Polyurethan-Werkstoff bildenden, fließfähigen Reaktionsgemisches aus mindestens zwei fließfähigen Reaktionskomponenten (P, I), welche von Vorratszonen (1, 2) im vorgegebenen Verhältnis dosiert zu mehreren parallel geschalteten Mischzonen gefördert werden, wobei Hauptströme (8, 9) jeweils in eine mindestens der Anzahl der Mischzonen entsprechende Anzahl von paarweise einander zugeordneten Teilströmen ($8_1,8_2,8_3,9_1,9_2 9_3$) aufgeteilt werden, dadurch gekennzeichnet, daß die Hauptströme (8, 9) dosiert werden und mittels einer gesonderten Einrichtung (10, 11) sowohl das Dosierverhältnis der einander zugeordneten Teilströme ($8_1,8_2,8_3,9_1,9_2,9_3$) der Komponenten (P, I) entsprechend dem Dosierverhältnis der Hauptströme aufrechterhalten wird (8, 9) als auch ein vorgegebenes Aufteilungsverhältnis der Teilströme ($8_1,8_2,8_3,9_1,9_2,9_3$) untereinander gewährleistet wird.

2. Verfahren nach Anspruch 1, dadurch gekennzeichnet, daß die Hauptströme (8, 9) jeweils zu Teilströmen ($8_1,8_2,8_3,9_1,9_2,9_3$) unterschiedlicher Mengen aufgeteilt werden.

3. Verfahren nach einem der Ansprüche 1 oder 2, dadurch gekennzeichnet, daß mindestens einer der einander zugeordneten Teilströme($8_1,8_2,8_3,9_1,9_2,9_3$) zu den Vorratszonen (1, 2) zurückgefördert wird.

4. Verfahren nach Anspruch 3, dadurch gekennzeichnet, daß die Rückförderung zu den Vorratszonen (1, 2) nur zeitweise erfolgt.

5. Verfahren in Abwandlung des Verfahrens nach Ansprüchen 1 oder 2 bis 4, dadurch gekennzeichnet, daß die Hauptströme (8, 9) der Reaktionskomponenten (P, I) in einander paarweise zugeordnete, unterschiedliche und vom Dosierverhältnis der Hauptströme (8, 9) abweichende Teilströme ($8_1,8_2 8_3,9_1,9_2,9_3$) aufgeteilt werden.

6. Einrichtung zur Durchführung des Verfahrens nach den Ansprüchen 1 bis 4 oder 5, bestehend aus Vorratsbehältern (1, 2) von denen Zuleitungen (3, 4) über Dosierpumpen (5, 6) zu mehreren parallel angeordneten Mischköpfen ($M_1,M_2,M_3$) führen, und für jede Reaktionskomponente eine Dosierpumpe (5, 6) vorgesehen dadurch gekennzeichnet, daß zwischen diesen Dosierpumpen (5, 6) und den Mischköpfen ($M_1,M_2,M_3$) aus parallel angeordneten Elementen ($P_1,P_2,P_3;I_1,I_2,I_3$; 21, 22, 23; 31, 32, 33) bestehende Mengenteiler (10, 11; 20; 30) in den Zuleitungen ($8_1,13_1;8_2,13_2;8_3,13_3;9_1,14_1;9_2,14_2;9_3,14_3$; 24, 25, 26; 38, 39, 40) vorgesehen sind, wobei diese Mengenteiler (10, 11, 20, 30) miteinander zwangsgekoppelt sind.

7. Einrichtung nach Anspruch 6, dadurch gekennzeichnet, daß die Elemente (21, 22, 23) der Mengenteiler (20) unterschiedliche Durchsatzleistung besitzen.

8. Einrichtung nach einem der Ansprüche 6 oder 7, dadurch gekennzeichnet, daß die Elemente (31, 32, 33) jedes Mengenteilers (30) durch Untersetzungsgetriebe (34, 35, 36) miteinander verbunden sind.

9. Einrichtung nach Anspruch 8, dadurch gekennzeichnet, daß die Untersetzungsgetriebe (34, 35, 36) schaltbar sind.


**Claims**

1. Process for the production of a flowable reaction mixture which forms a plastic, in particular a polyurethane material, and consists of at least two flowable reaction components (P, I) which are conveyed from storage zones (1, 2), being metered in a predetermined ratio, to several mixing zones which are connected in parallel, the main streams (8, 9) being divided up in each case into a number, corresponding to at least the number of mixing zones, of divisional streams ($8_1, 8_2, 8_3, 9_1, 9_2, 9_3$) which are allocated to each other in pairs, characterised in that the main streams (8, 9) are metered and, by means of a separate device (10, 11), not only the metering ratio of the inter-allocated divisional streams ($8_1, 8_2, 8_3, 9_1, 9_2, 9_3$) of the components (P, I) is maintained (8, 9) corresponding to the metering ratio of the main streams but also a predetermined distribution ratio between the individual divisional streams ($8_1, 8_2, 8_3, 9_1, 9_2, 9_3$) is guaranteed.

2. Process according to Claim 1, characterised in that the main streams (8; 9) are each divided into divisional streams ($8_1, 8_2, 8_3, 9_1, 9_2, 9_3$) of different quantities.

3. Process according to one of Claims 1 or 2, characterised in that at least one of the inter-allocated divisional streams ($8_1, 8_2, 8_3, 9_1, 9_2, 9_3$) is returned to the storage zones (1, 2).

4. Process according to Claim 3, characterised in that the return to the storage zones (1, 2) only takes place periodically.

5. Process in modification of the process according to Claims 1 or 2 to 4, characterised in that the main streams (8, 9) of the reaction components (P, I) are divided up into different divisional streams ($8_1, 8_2, 8_3, 9_1, 9_2, 9_3$) which are allocated to each other in pairs and which differ from the metering ratio of the main streams (8, 9).

6. Apparatus for carrying out the process according to Claims 1 to 4 or 5, consisting of storage containers (1, 2), from which supply lines (3, 4) lead via metering pumps (5, 6) to several mixing heads ($M_1, M_2, M_3$) which are arranged in parallel, and one metering pump (5, 6) is provided for each reaction component, characterised in that flow dividers (10, 11; 20; 30) consisting of elements arranged in parallel ($P_1, P_2, P_3, I_1, I_2, I_3$, 21, 22, 23; 31, 32, 33) are provided between these metering pumps (5, 6) and the mixing heads $M_1,M_2,M_3$ in the supply lines ($8_1, 13_1$; $8_2, 13_2$; $8_3$, $13_3$; $9_1, 14_1, 9_2, 14_2, 9_3, 14_3$, 24, 25, 26; 38, 39, 40), these flow dividers (10, 11, 20, 30) being positively interconnected.

7. Apparatus according to Claim 6, characterised in that the elements (21, 22, 23) of the flow dividers (20) have different throughput capacities.

8. Apparatus according to one of Claims 6 or 7, characterised in that the elements (31, 32, 33) of each flow divider (30) are interconnected by reducing gears (34, 35, 36).

9. Apparatus according to Claim 8, characterised in that the reducing gears (34, 35, 36) may be switched.


**Revendications**

1. Procédé pour produire une matière plastique, en particulier pour produire un mélange réactionnel fluide formateur d'une matière à base de polyuréthanne, à partir d'au moins deux constituants fluides (P, I) participant à la réaction, qui sont transportés depuis des zones de stockage (1, 2), en étant dosés suivant un rapport préfixé, à plusieurs zones de mélange branchées en parallèles, procédé dans lequel on divise des courants principaux (8, 9) chacun en au moins autant de courant partiel ($8_1, 8_2, 8_3, 9_1, 9_2, 9_3$) qu'il y a de zones de mélange, les courants partiels étant mutuellement coordonnés par paires, caractérisé en ce que l'on dose les courants principaux (8, 9) et que, au moyen d'un dispositif (10, 11) particulier, on assure à la fois que le rapport de dosage des courants partiels mutuellement coordonnés ($8_1, 8_2, 8_3, 9_1, 9_2, 9_3$) des constituants (P, I) reste conforme au rapport de dosage des courants principaux et qu'un rapport de répartition préfixé des courants partiels ($8_1, 8_2, 8_3, 9_1, 9_2, 9_3$) entre eux soit respecté.

2. Procédé selon la revendication 1, caractérisé en ce que l'on divise chacun des courants principaux (8, 9) en courants partiels ($8_1, 8_2, 8_3, 9_1, 9_2, 9_3$) de débits différents.

3. Procédé selon la revendication 1 ou 2, caractérisé en ce que l'on retourne au moins l'un des courants partiels mutuellement coordonnés ($8_1, 8_2, 8_3, 9_1, 9_2, 9_3$) aux zones de stockage (1, 2).

4. Procédé selon la revendication 3, caractérisé en ce que l'on produit de temps en temps seulement le retour aux zones de stockage (1, 2).

5. Procédé selon une variante du procédé des revendications 1 ou 2 à 4, caractérisé en ce que l'on divise les courants principaux (8, 9) des constituants réactis (P, I) en courants partiels ($8_1$, $8_2$, $8_3$, $9_1$, $9_2$, $9_3$), coordonnés mutuellement par paires, qui diffèrent entre eux et s'écartent du rapport de dosage des courants principaux (8, 9).

6. Dispositif pour la mise en oeuvre du procédé selon les revendications 1 à 4 ou 5, comprenant des réservoirs (1, 2) d'où des conduites d'amenée (3, 4) contenant des pompes de dosage (5, 6) mènent à plusieurs têtes mélangeuses ($M_1$, $M_2$, $M_3$) disposées en parallèle, avec prévision d'une pompe de dosage (5, 6) pour chaque constituant réactif, caractérisé en ce que des diviseurs de débit hydrauliques (10, 11; 20; 30), composés d'éléments ($P_1$, $P_2$, $P_3$, $I_1$, $I_2$, $I_3$; 21, 22, 23; 31, 32, 33) disposés parallèlement, sont prévus dans les conduites d'amenée ($8_1$, $13_1$; $8_2$, $13_2$; $8_3$, $13_3$; $9_1$, $14_1$; $9_2$, $14_2$; $9_3$, $14_3$; 24, 25, 26, 38, 39, 40) entre les pompes de dosage (5, 6) et les têtes mélangeuses ($M_1$, $M_2$, $M_3$), ces diviseurs de débit (10, 11; 20; 30) étant accouplés par force entre eux.

7. Dispositif selon la revendication 6, caractérisé en ce que les éléments (21, 22, 23) des diviseurs de débit (20) ont des capacités de débit différentes.

8. Dispositif selon la revendication 6 ou 7, caractérisé en ce que les éléments (31, 32, 33) de chaque diviseur de débit (30) sont reliés entre eux par des engrenages démultiplicateurs (34, 35, 36).

9. Dispositif selon la revendication 8, caractérisé en ce que les engrenages démultiplicateurs (34, 35, 36) permettent le passage à différentes vitesses.

FIG. 1

FIG. 2

FIG. 3